# EUROPÄISCHE PATENTANMELDUNG

(11) **EP 4 603 328 A2**
(43) Veröffentlichungstag der Anmeldung: **20.08.2025**
(21) Anmeldenummer: 25181478.6
(22) Anmeldetag: 02.02.2024
(51) Int. Cl.: B60P 3/36

(54) **CAMPINGBOX UND FAHRZEUG MIT DIESER CAMPINGBOX**

(30) Priorität: 18.04.2023 AT 600662023
(62) Teilanmeldung aus: 24710587.7
(71) Anmelder: CampBoks GmbH, 3324 Euratsfeld (AT)
(72) Erfinder: GALLISTL, Lothar, 4820 Bad Ischl (AT); SCHNEIDER, Paul, 3324 Euratsfeld (AT)
(74) Vertreter: Jell, Friedrich

(57) **Zusammenfassung**

Es wird eine Campingbox (1) in Form eines in ein Fahrzeug einsetzbaren, insbesondere quaderförmigen, Kastens (1a) gezeigt.

## Beschreibung

Die Erfindung betrifft eine Campingbox in Form eines in ein Fahrzeug einsetzbaren, insbesondere quaderförmigen, Kastens, mit einer Oberseite, mit einer, insbesondere von einer Fahrzeuginnenseite zugänglich ausgebildeten, Vorderseite und mit einer, insbesondere über eine Hecköffnung des Fahrzeugs zugänglich ausgebildeten, Rückseite, die über die Breite zumindest einen Abschnitt aufweist, wovon ein erster Abschnitt einen ersten, ein- und ausziehbaren Kasteneinschub mit einem ersten Auszug, insbesondere Vollauszug, aufweist, dessen Auszug am Kasten über zumindest zwei feststehende und sich parallel gegenüberliegende Korpusschienen befestigt ist.

### Stand der Technik

Aus der EP2574500A1 ist eine Campingbox bekannt, die als Wohnausstattung in ein Fahrzeug eingesetzt werden kann und verschiedene Funktionen zur Verfügung stellt, wie die Funktionalität einer Liege- und/oder Sitzfläche zum Schlafen und/oder Sitzen, eines Stauraums für Campingausrüstung, einer Kücheneinrichtung mit Herd und Spüle, etc.. Hierzu weist diese Campingbox einen quaderförmigen Kasten mit der Liegefläche auf der Oberseite, mit einer von einer Fahrzeuginnenseite zugänglich ausgebildeten Vorderseite und mit einer über eine Hecköffnung des Fahrzeugs zugänglich ausgebildeten Rückseite auf. Diese Rückseite ist über deren Breite in drei voneinander getrennte Abschnitte geteilt. Im ersten Abschnitt dieser drei Abschnitte ist ein erster, ein- und ausziehbarer Kasteneinschub mit einem Auszug vorgesehen, wobei der Kasteneinschub als Schublade ausgebildet ist. Der Auszug ist am Kasten über zwei, feststehende und sich parallel gegenüberliegende Korpusschienen befestigt. Die Schublade füllt die gesamte Höhe des vom Kasten ausgebildeten Nutzraumes aus, um die Funktionalität einer Kücheneinrichtung zur Verfügung stellen zu können. Für einen weiteren Kasteneinschub in diesem Abschnitt bedarf bei gleichbleibenden Abmessungen nachteilig einer Erhöhung der Kastenhöhe. Diese Erhöhung ist jedoch meistens aufgrund eines geforderten Mindestabstands zwischen der Liege- und/oder Sitzfläche und dem Fahrzeugdach unmöglich, was dann die von der Campingbox zur Verfügung gestellten Funktionalitäten beschränkt.

### Darstellung der Erfindung

Die Erfindung hat sich daher die Aufgabe gestellt, eine Campingbox der eingangs geschilderten Art bei minimalem Einfluss auf die Außenabmessungen, insbesondere auf die Höhe, der Campingbox diese in ihrer Funktionalität weiterzuentwickeln.

Die Erfindung löst die gestellte Aufgabe durch die Merkmale des Anspruchs 1.

Indem der erste Abschnitt einen zweiten, insbesondere unterhalb des ersten Kasteneinschubs vorgesehenen, ein- und ausziehbaren Kasteneinschub in Form einer Sitzbank aufweist, kann die Funktionalität der Campingbox um eine Sitzgelegenheit erweitert werden. Diese funktionale Ergänzung der Campingbox führt jedoch nicht zu einer wesentlichen Erhöhung der Kastenhöhe, da sich erfindungsgemäß die Sitzbank am Kasten über die erste und/oder zweite Korpusschiene des ersten Auszugs abstützt. Damit können von der Sitzbank die konstruktiven Maßnahmen zu der beweglichen Lagerung des ein- und ausziehbaren Kasteneinschubs mitbenützt werden, was den Bedarf an zusätzlicher Höhe zur Führung der Sitzbank verringert. Diese Abstützung kann auch direkt sein, wobei die Korpusschiene beispielsweise ein Dämpfungselement, beispielsweise aus Filz, aufweisen kann, an dem sich die Sitzbank direkt abstützt.

Die erfindungsgemäße Campingbox kann daher bei kompakten Bauverhältnissen eine höhere Funktionalität gewährleisten und somit flexibel bei verschiedensten Fahrzeugtypen verwendet werden.

Vorzugsweise ist die Sitzbank im Kasten über zwei, insbesondere feststehende, sich parallel gegenüberliegende Linearführungen ein- und ausziehbar gelagert. Dies kann die Handhabung und die Standfestigkeit der Sitzbank im Kasten weiter verbessern.

Hierbei ist weiter vorstellbar, dass die erste und zweite Korpusschiene je ein erstes Führungselement der Linearführungen ausbilden. Auf zusätzliche Führungselemente zumindest auf einer Seite der Linearführung kann damit verzichtet werden. Diese Abstützung der Sitzbank kann auch direkt sein, wobei die Korpusschiene beispielsweise ein Dämpfungselement, beispielsweise Filz, aufweisen kann, an dem sich die Sitzbank direkt abstützt.

Vorstellbar ist weiter, dass sich je ein erstes Führungselement der Linearführung an der jeweiligen Korpusschiene abstützt. Diese Abstützung kann auch direkt sein. Hierbei ist vorstellbar, dass die Korpusschiene ein Dämpfungselement, beispielsweise Filz, aufweisen kann, an dem sich die Sitzbank direkt abstützt.

Beispielsweise weisen die Linearführungen unterhalb der Sitzbank jeweils zumindest eine Längsleiste als zweites Führungselement auf, welche Längsleisten parallel verlaufen und an denen entlang die Sitzbank gleitend verschiebbar gelagert ist.

Dies kann unter anderem das Ein- und Ausziehen des zweiten Kasteneinschubs bzw. der Sitzbank erleichtern.

Diese Längsleisten sind beispielsweise aus Metall, um die mechanische Stabilität weiter erhöhen zu können.

Vorzugsweise sind die Längsleisten am Kasten direkt befestigt, um die Belastungen auf die Sitzbank direkt auf den Kasten standfest abtragen zu können.

Diese Belastungen können beispielsweise auch flächiger auf den Kasten übertragen werden, wenn die Längsleisten der Linearführungen Teil eines gemeinsamen ersten geschlossenen Rahmens sind. Der Rahmen ist insbesondere aus Metall, was die Standfestigkeit weiter erhöhen kann.

Diese Befestigung kann weiter verbessert werden, wenn die erste und/oder zweite Korpusschiene über metrische Schrauben an dem Kasten befestigt sind, der hierzu, insbesondere außen vorgesehene, Gewindeeinsätze oder Einschlagmuttern aufweist.

Damit kann zudem die Parallelität der sich parallel gegenüberliegenden Korpusschienen unter anderem standfest garantiert werden. Dies vermindert die Gefahr eines Verklemmens des ein- und ausziehbaren Kasteneinschubs - dies auch dann, wenn hohe mechanische Lasten über den Auszug auf die betreffende Korpusschiene wirken. Mit der, beispielsweise mit je einem Schraubenkopf, angreifenden Schrauben sowie der an dem Kasten angreifenden Gewindeeinsätze oder Einschlagmuttern kann nämlich eine belastbare mechanische Verbindung geschaffen werden - diese unter anderem dadurch, weil damit vergleichsweise hohe Flächenpressungen möglich werden. Dies insbesondere dann, wenn die Korpusschienen aus einem Metallwerkstoff und/oder der Kasten aus einem Holzwerkstoff bestehen.

Weist die Sitzbank beispielsweise eine, insbesondere rechteckförmige, Plattenform auf, kann diese die Handhabung des zweiten Kasteneinschubs weiter erleichtern.

Vorstellbar ist, dass die Rückseite einen zweiten Abschnitt aufweist, wobei die Abschnitte durch eine Abtrennung, insbesondere Zwischenwand oder einen geschlossenen, insbesondere rechteckförmigen, Innenrahmen, voneinander getrennt sind.

Vorzugsweise sind die erste Korpusschiene und die erste Längsleiste an einer Längsseitenwand an der Längsseite des Kastens und die zweite Korpusschiene und die zweite Längsleiste an der Abtrennung des Kastens befestigt sind. Dies kann die mechanische Standfestigkeit der Campingbox weiter verbessern.

Hierbei kann beispielsweise ein zweiter Abschnitt einen dritten ein- und ausziehbaren Kasteneinschub mit einer Kochstelle aufweisen, um eine Kochgelegenheit zu ermöglichen.

Die Funktionalität der Campingbox kann zusätzlich erweitert werden, wenn der zweite Abschnitt einen vierten, unterhalb des dritten Kasteneinschubs vorgesehenen, ein-und ausziehbaren Kasteneinschub in Form einer Sitzbank aufweist, welche Sitzbank sich am Kasten über die erste und/oder zweite Korpusschiene eines zweiten Auszugs abstützt.

Auch kann für eine hohe Standfestigkeit weiter vorteilhaft sein, wenn der dritte Kasteneinschub an seinem freien Ende eine Abwaschstelle mit einem Wasserhahn aufweist, der mit einem Wasserbehälter im Kasten über eine Versorgungsleitung verbunden ist, wobei die Versorgungsleitung über eine Schleppkette im dritten Kasteneinschub längenvariabel geführt wird.

Vorzugsweise weist die Rückseite einen dritten Abschnitt auf, der zwischen dem ersten und zweiten Abschnitt vorgesehen ist.

Beispielsweise weist der dritte Abschnitt einen Stauraum im Kasten auf, der insbesondere über eine Drehtür des Kastens zugänglich ist, um damit auch im Bereich der Rückseite der Campingbox deren Handhabung zu erleichtern.

Dies kann weiter verbessert, wenn der dritte Abschnitt einen fünften Kasteneinschub in Form eines Tisches aufweist, der insbesondere über dem Stauraum vorgesehen ist. Der Tisch weist beispielsweise eine, insbesondere rechteckförmige, Plattenform auf.

Die Funktionalität der Campingbox kann weiter erweitert werden, wenn die Oberseite beispielsweise eine Liege- und/oder Sitzfläche aufweist. Die Liege- und/oder Sitzfläche kann zumindest ein erstes, ein zweites und ein drittes Segment aufweisen, welche Segmente in eine, eine Rückenlehne ausbildende Aufstelllage und in eine ebene Liegelage bewegbar sind und hierfür über Schwenkverbindungen zusammenhalten.

Eine hohe Standfestigkeit der Rückenlehne bei kompakten Abmessungen der Campingbox kann beispielsweise erreicht werden, wenn ein, insbesondere das zweite, Segment Vorsprünge aufweist, die in Rücksprünge am anderen, insbesondere dritten, Segment eingreifen und an den Böden der Rücksprünge über je zumindest eine Schwenkverbindung verbunden sind. In der Aufstelllage ragt nämlich das dritte Segment unterhalb des zweiten Segments vor, was dessen Abstützung am Kasten verbessert. Die Segmente sind beispielsweise jeweils plattenförmig.

Die Konstruktion der Campingbox kann weiter vereinfacht werden, wenn das erste Segment über zumindest eine Schwenkverbindung mit dem Kasten verbunden ist und das dritte Segment entlang des Kastens verschiebbar ist.

Eine weitere Erweiterung der Funktionalität der Campingbox kann sich beispielsweise ergeben, wenn die Oberseite eine Liege- und/oder Sitzfläche aufweist, wobei die Liege- und/oder Sitzfläche ein viertes Segment aufweist, das an einem Ende mit dem Kasten über zumindest eine Schwenkverbindung verbunden ist und eine ein- und ausklappbare Stütze für eine schräge Kopfstützlage aufweist.

Beispielsweise kann zur Gewichtsreduktion die Campingbox an zumindest einer Längsseitenwand an einer Längsseite des Kastens oberhalb der betreffenden ersten Korpusschiene des ersten oder zweiten Auszugs mehrere Aussparungen aufweisen.

Die erfindungsgemäße Campingbox eignet sich insbesondere für ein Fahrzeug. Das Fahrzeug kann beispielsweise ein Kraftfahrzeug sein.

### Kurze Beschreibung der Zeichnungen

In den Figuren ist beispielsweise der Erfindungsgegenstand anhand einer Ausführungsvariante dargestellt. Es zeigen
Fig. 1 eine dreidimensionale Ansicht auf eine Campingbox mit eingeschobenem ersten und zweiten Kasteneinschub,
Fig. 2 eine dreidimensionale Ansicht der Campingbox nach Fig. 1 mit einem ausgezogenen ersten und dritten Kasteneinschub,
Fig. 3 eine dreidimensionale Ansicht der Campingbox nach Fig. 1 mit ausgezogenen, zweiten, vierten und fünften Kasteneinschub,
Fig. 4 eine abgerissene und vergrößerte Rückansicht der Fig. 3,
Fig. 4a eine Detailansicht der Fig. 4,
Fig. 5 eine dreidimensionale Ansicht der Campingbox nach Fig. 1 mit einer Liege-und/oder Sitzfläche in Liegelage und

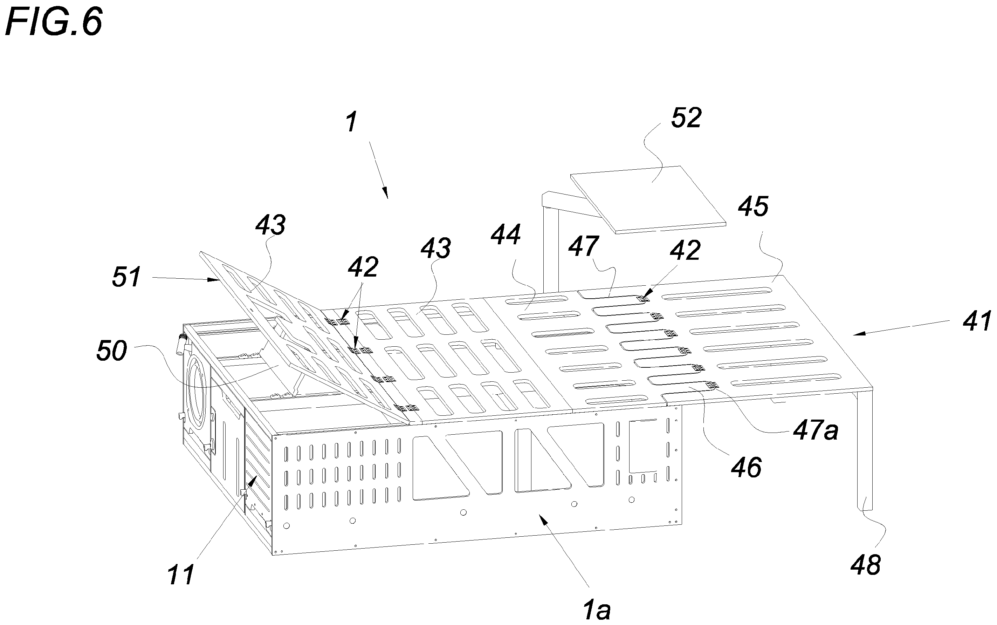

Fig. 6 eine dreidimensionale Ansicht der Campingbox nach Fig. 1 mit der Liege-und/oder Sitzfläche in Kopfstützlage.

### Weg zur Ausführung der Erfindung

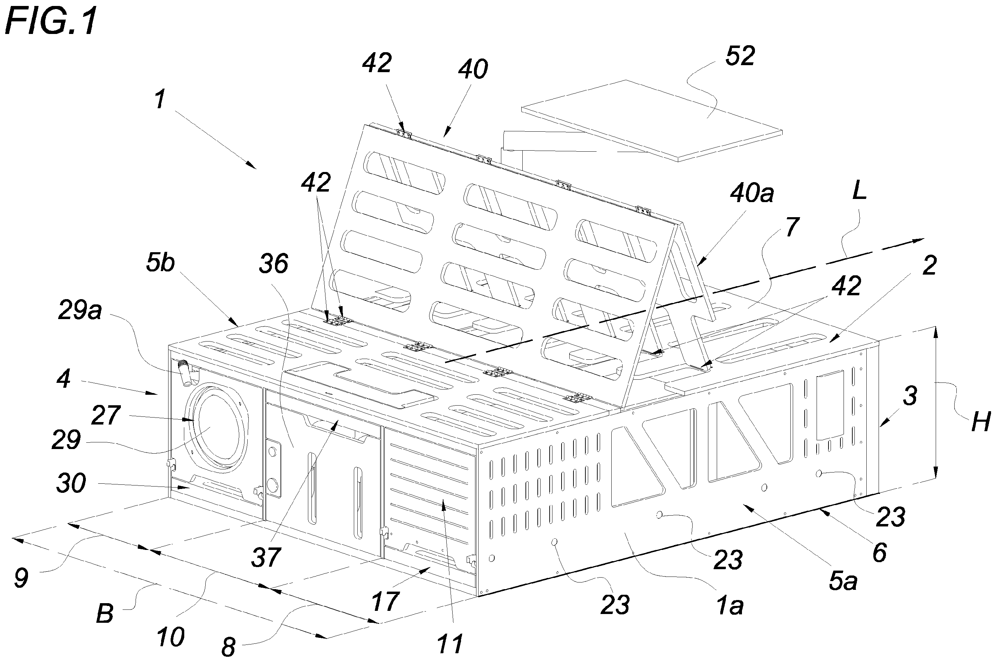

In der Fig. 1 ist beispielsweise eine Campingbox 1 dargestellt, die in ein nicht näher dargestelltes Fahrzeug der Länge L nach eingesetzt werden kann, beispielsweise in dem diese Campingbox 1 in den Kofferraum des Fahrzeugs eingeschoben wird. Bei diesem Fahrzeug kann es sich um ein Kraftfahrzeug handeln. Das Kraftfahrzeug kann beispielsweise ein Transporter oder Kastenwagen sein.

Die Campingbox 1 hat die Form eines quaderförmigen Kastens 1a mit außen -wie in Figuren zu erkennen- einer Oberseite 2, einer Vorderseite 3, einer Rückseite 4, zwei Längsseiten 5a, 5b und einer Bodenseite 6. Wenn die Campingbox 1 im Fahrzeug vorgesehen ist, dann ist die Vorderseite 3 von der Fahrzeuginnenseite aus zugänglich und die Rückseite 4 von der Hecköffnung des Fahrzeugs aus zugänglich. Damit ist diese Vorderseite 3, wenn die Campingbox 1 im Fahrzeug vorgesehen ist, von der Fahrzeuginnenseite zugänglich ausgebildet und die Rückseite 4, wenn die Campingbox 1 im Fahrzeug vorgesehen ist, über die Hecköffnung des Fahrzeugs zugänglich ausgebildet.

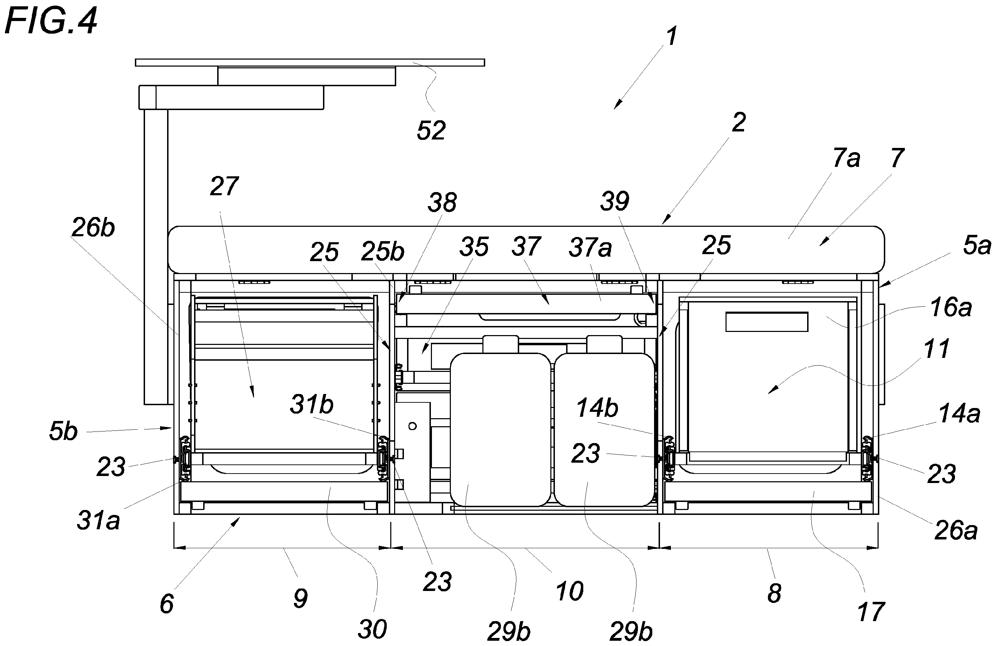

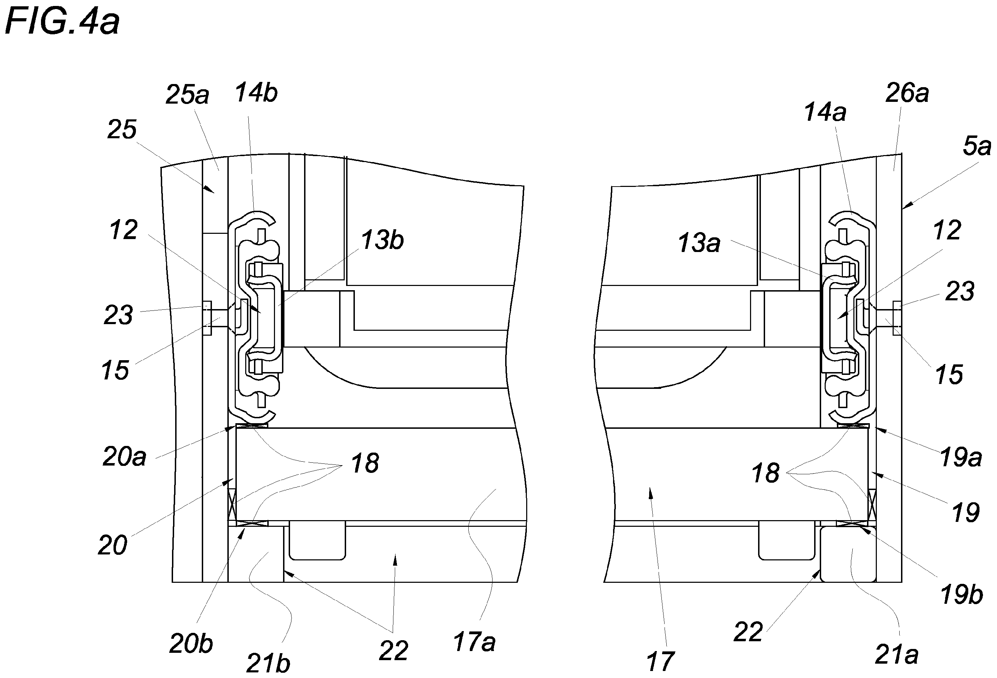

Auf der Oberseite 2 ist eine Liege- und/oder Sitzfläche 7 vorgesehen, die wie in Fig. 4 dargestellt eine Auflage 7a, beispielsweise Matratze, aufweist.

An der Rückseite 4 weist die Campingbox 1 über ihre Breite B drei voneinander getrennte Abschnitte 8, 9, 10 auf.

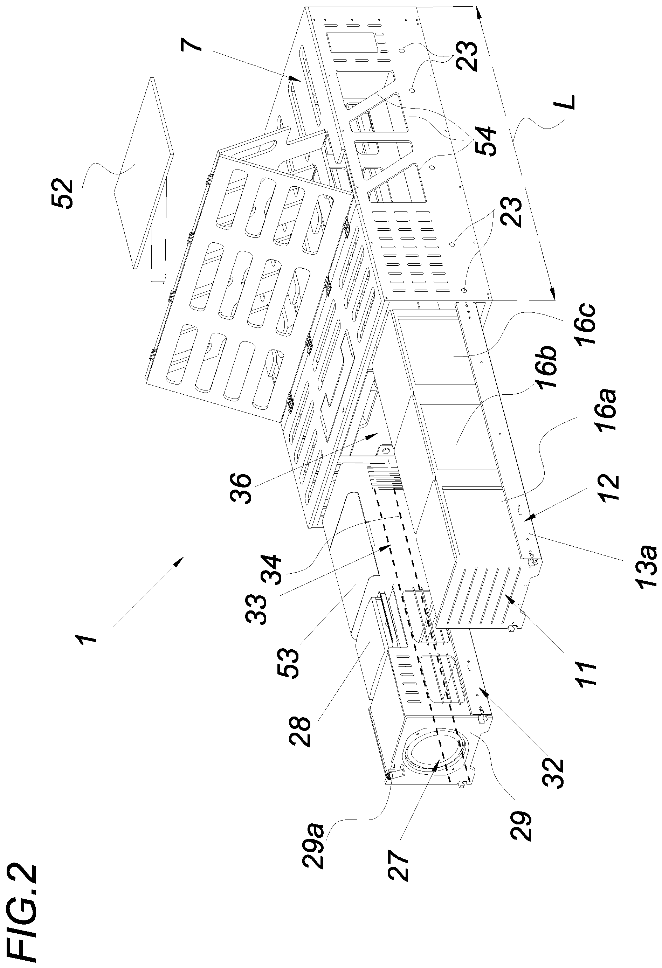

Davon weist ein erster Abschnitt 8 einen ersten, ein- und ausziehbaren Kasteneinschub 11 mit einem ersten Auszug 12, nämlich Vollauszug, auf, wie in Fig. 2 im Detail zu erkennen. Von diesem ersten Auszug 12 ist in Fig. 2 eine Auszugsschienen 13a der Auszugsschienen 13a, 13b zu erkennen, die in je einer Korpusschiene 14a, 14b des Auszugs 12 linear verschiebbar gelagert ist, was in Fig. 4 und 4a dargestellt ist. Die zwei Korpusschienen 14a, 14b sind feststehend, liegen sich parallel gegenüber und sind am Kasten 1a über Schrauben 15 befestigt.

Der erste Kasteneinschub 11 ist in Form einer Schublade ausgebildet und trägt, wie in Fig. 2 zu erkennen, drei Lagerkisten 16a, 16b und 16c für beispielsweise Campingutensilien, Lebensmittel etc.. Die Lagerkisten 16a, 16b und 16c sind vergleichsweise hoch ausgeführt und nützen so im Kasten 1a fast die gesamte Kastenhöhe H aus.

Erfindungsgemäß kann aber dem ersten Abschnitt 8 trotz des bereits hohen Ausnutzungsgrads dennoch eine weitere Funktionalität hinzugefügt werden. Der erste Abschnitt 8 weist nämlich zusätzlich noch einen zweiten, unterhalb des ersten Kasteneinschubs 11 vorgesehenen, ein- und ausziehbaren Kasteneinschub 17 in Form einer Sitzbank 17a auf. Dieser zweite Kasteneinschub 17 benötigt jedoch -wie in Fig. 4a dargestellt- zu seiner standfesten Führung kein zusätzliches oberes Führungselement. Daher bedarf es auch keinen zusätzlichen Höhenaufbau im Kasten 1a, weil sich erfindungsgemäß die Sitzbank 17a am Kasten 1a über die erste und zweite Korpusschiene 14a, 14b des ersten Auszugs 12 abstützt. So ist in Fig. 4a zu erkennen, dass die Sitzbank 17a an Dämpfungselementen 18 der ersten oder zweiten Korpusschiene 14a, 14b direkt anliegt. Die Dämpfungselementen 18 aus einem Filzband sind an die Korpusschiene 14a, 14b angeklebt. Eine in den Außenabmessungen kompakte Campingbox 1 mit gegenüber dem Stand der Technik bekannten Campingboxen erweiterter Funktionalität ist damit gegeben.

Es ist aber auch vorstellbar, dass zwischen der Sitzbank 17a und der ersten und/oder zweiten Korpusschiene 14a, 14b ein nicht näher dargestelltes Längsprofil vorgesehen ist, über welches Längsprofil sich die Sitzbank 17a an der jeweiligen Korpusschiene 14a, 14b abstützt, was nicht dargestellt worden ist.

Die Sitzbank 17a ist zur standfesten Führung im Kasten 1a über zwei feststehende und sich parallel gegenüberliegende Linearführungen 19, 20 ein- und ausziehbar gelagert. Davon bilden die Korpusschienen 14a, 14b je ein erstes Führungselement 19a, 20a der Linearführungen 19, 20 aus. Die ersten Führungselemente 19a, 20a sind oberhalb der Sitzbank 17a angeordnet. Unterhalb der Sitzbank 17a sind zwei parallel zueinander verlaufende Längsleisten 21a, 21b aus Metall als zweite Führungselemente 19b, 20b vorgesehen, an denen entlang die Sitzbank 17a gleitend verschiebbar gelagert ist.

Auch hier sind auf den Längsleisten 21a, 21b Dämpfungselemente 18 aus einem Filzband angeklebt, um das Gleiten zu erleichtern und Beschädigungen an der ersten Sitzbank 17a zu vermeiden, wie in Fig. 4a zu erkennen. Außerdem sind auch noch Dämpfungselemente 18 aus einem Filzband seitlich zur ersten Sitzbank 17a vorgesehen. Diese Dämpfungselemente 18 sind an der Längsseitenwand 26a des Kastens 1a oder an der Abtrennung 25 des Kastens 1a angeklebt. Damit ist die erste Sitzbank 17a besonders leichtgängig in der Handhabung sowie standfest geschützt.

Diese Längsleisten 21a, 21b sind am Kasten 1a direkt befestigt, und zwar über nicht näher dargestellte Schrauben. Zudem sind diese Längsleisten 21a, 21b Teil eines gemeinsamen ersten geschlossenen Rahmens 22 aus Metall.

Die ersten und zweiten Korpusschienen 14a, 14b sind über metrische Schrauben 15 an dem Kasten 1a befestigt, der hierzu außen vorgesehene Einschlagmuttern 23 aufweist. Hierzu sind die Einschlagmuttern 23 in der jeweiligen Längsseitenwand 26a, 26b der Längsseite 5a, 5b an der Außenseite eingeschlagen.

Der Senkkopf der Schrauben 15 liegt an der betreffenden Korpusschiene 14a, 14b versenkt an, wie in Fig. 4a zu erkennen. Das Gewinde am Schaft der Schrauben 15 ist mit der jeweiligen Einschlagmutter 23 verschraubt. Damit sind hohe Flächenpressungen für eine standfeste mechanische Verbindung zwischen den Korpusschienen 14a, 14b und dem Kasten 1a möglich.

Die Schrauben 15 zur jeweiligen Korpusschiene 14a, 14b sind, wie in den Figuren zu erkennen, entlang einer geraden Linie angeordnet, welche Linie parallel zur Unterkante des Kastens 1a verläuft.

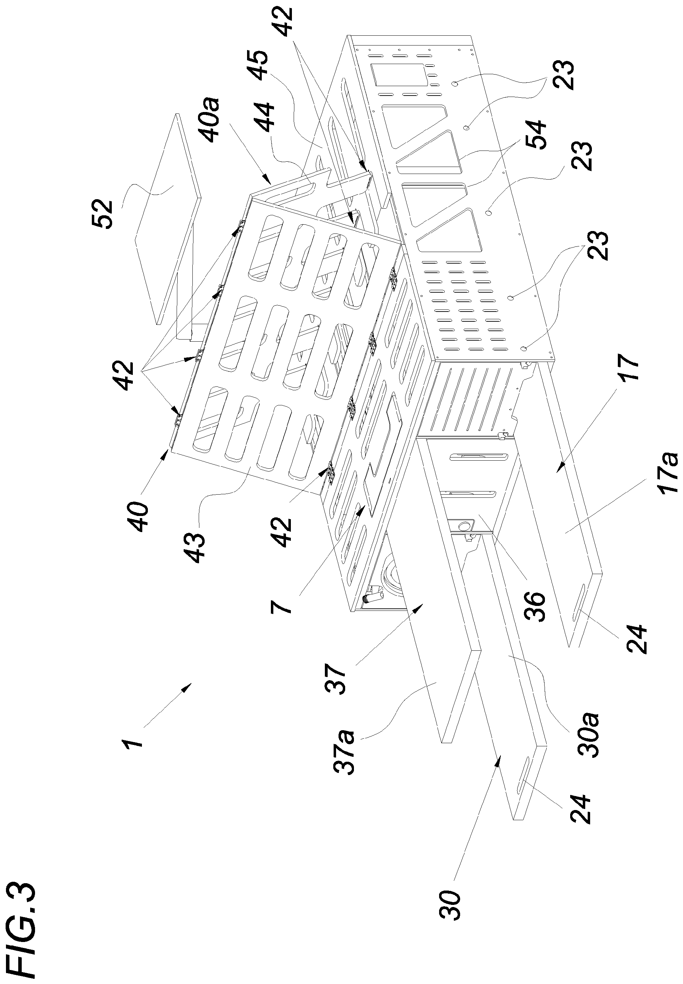

Die Sitzbank 17a weist eine rechteckförmige Plattenform auf, wie in der Fig. 3 zu erkennen ist. Am freien Ende ist ein Griffaussparung 24 vorgesehen, was deren Handhabung erleichtert.

Die drei Abschnitte 8, 9 und 10 sind durch je eine Abtrennung 25 des Kastens 1a voneinander getrennt. Diese im Kasten 1a befindliche Abtrennungen 25 sind als ein geschlossener, rechteckförmiger Innenrahmen 25a, 25b ausgebildet.

Die ersten und zweiten Längsleisten 21a, 21b sowie die ersten und zweiten Korpusschienen 14a, 14b sind an einer Längsseitenwand 26a, 26b an der betreffenden Längsseite 5a, 5b des Kastens 1a oder an dem Innenrahmen 25a, 25b befestigt, was für den ersten und zweiten Kasteneinschub 11, 17 des ersten Abschnitts 8 eine standfeste Verbindung mit dem Kasten 1a darstellt.

Der zweite Abschnitt 9 der Campingbox 1 weist einen dritten ein- und ausziehbaren Kasteneinschub 27 mit einer Kochstelle 28, einer Abwaschstelle 29 und einen Kühlschrank 53 auf.

Zudem ist im zweiten Abschnitt 9 ein vierter unterhalb des dritten Kasteneinschubs 27 vorgesehenen, ein- und ausziehbaren Kasteneinschub 30 in Form einer Sitzbank 30a vorgesehen, wie Fig. 3 zu erkennen. Diese Sitzbank 30a stützt sich am Kasten 1a über die erste und zweite Korpusschiene 31a, 31b des zweiten Auszugs 32 ab, wie in Fig. 2 zu erkennen. Die Führung zur zweiten Sitzbank 30a ist gleich ausgeführt, wie bereits zur ersten Sitzbank 17a beschrieben und beispielsweise in Fig. 4 und Fig. 4a zu erkennen ist.

Die Wasserversorgung der Abwaschstelle 29, die am freien Ende des dritten Kasteneinschubs 27 vorgesehen ist, wird über einen Versorgungsleitung 33 versorgt, die über eine Schleppkette 34 im dritten Kasteneinschub 27 längenvariabel geführt wird.

Der dritte mittlere Abschnitt 10 weist einen Stauraum 35 im Kasten 1a auf, der über eine Drehtür 36 des Kastens 1a zugänglich ist.

Der dritte Abschnitt 10 weist zudem eine einen fünften ein- und ausziehbaren Kasteneinschub 37 in Form eines Tisches 37a auf, der über dem Stauraum 35 vorgesehen ist. Der Tisch 37a ist im Kasten 1a über eine dritte Linearführung 38, 39, die sich auf jeder Seite zwischen zwei Längsprofilen ausbildet, geführt. Der Tisch 37a weist, wie in den Figuren dargestellt, eine rechteckförmige Plattenform auf.

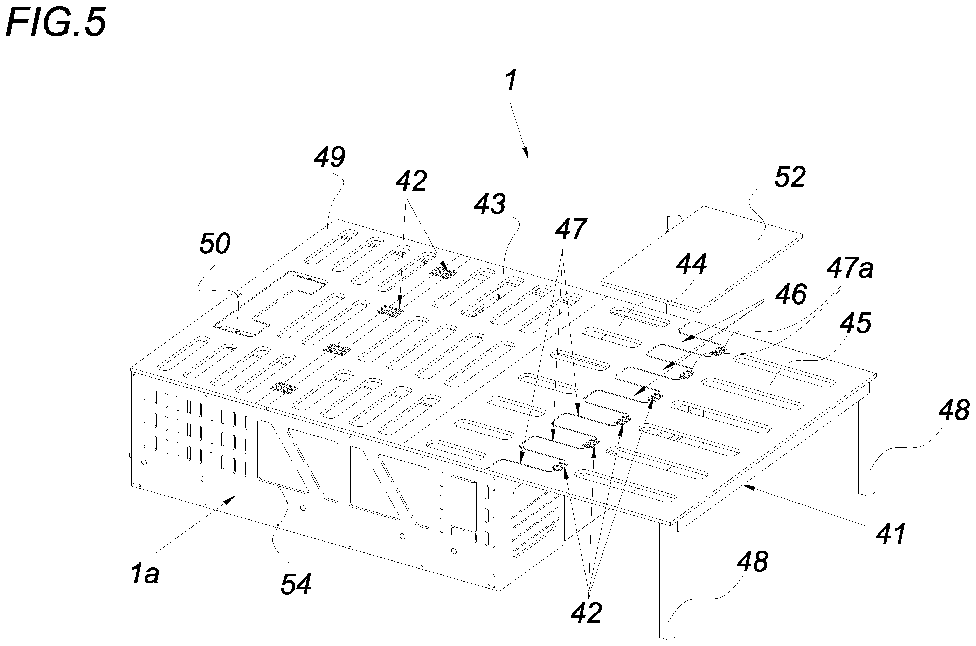

In den Figuren 2 und 3 ist zudem eine an der Liege- und/oder Sitzfläche 7 eine weitere Funktionalität an der Campingbox 1 zu erkennen. Die Liege- und/oder Sitzfläche 7 bildet hier eine Rückenlehne 40a aus. Die Liege- und/oder Sitzfläche 7 weist hierzu ein erstes, ein zweites und ein drittes, jeweils plattenförmiges Segment 43, 44, 45 auf. Die Segmente 43, 44, 45 können von einer, diese Rückenlehne 40a ausbildende Aufstelllage 40 und in eine ebene Liegelage 41, wie in Fig. 5 dargestellt, und wieder zurückbewegt werden. Hierfür werden diese über Schwenkverbindungen 42, wie beispielsweise Scharniere, zusammenhalten.

Eine hohe Standfestigkeit der Rückenlehne 40a bei kompakten Abmessungen der Campingbox 1 ergibt sich, indem die Vorsprünge 46 am zweiten Segment 44 in Rücksprünge 47 am dritten Segment 45 eingreifen. Die Vorsprünge 46 sind an den Böden der Rücksprünge 47 über je eine Schwenkverbindung 42 verbunden. Damit ragt in der Aufstelllage 40 das dritte Segment 45 dem anschließenden Ende des zweiten Segments 44 vor, was dessen Abstützung am Kasten 1a verbessert.

Das erste Segment 43 ist über mehrere Schwenkverbindungen 42 mit dem Kasten 1a verbunden. Das dritte Segment 45 ist entlang des Kastens 1a frei verschiebbar gelagert und stützt sich mit zwei Stützen 48 in Liegelage 41 ab.

Zudem weist die Liege- und/oder Sitzfläche 7 ein viertes Segment 49 auf, das an einem Ende mit dem Kasten 1a über mehrere Schwenkverbindungen 42 verbunden ist. Zudem nimmt das vierte plattenförmige Segment 49 eine ein- und ausklappbare Stütze 50 für eine schräg aufstellbare Kopfstützlage 51 der Liege- und/oder Sitzfläche 7 auf. Die ein- und ausklappbare Stütze 50 liegt im eingeklappten Zustand in der Ebene des vierten Segments 49.

Jede Schwenkverbindung 42 ist als Scharnier, beispielsweise Blattscharnier, ausgeführt, wie in den Figuren zu erkennen.

Zudem weist die Campingbox 1 bei der Liege- und/oder Sitzfläche 7 einen Klapptisch 52 auf.

Im dargestellten Ausführungsbeispiel sind die ersten und zweiten Korpusschienen 14a, 14b, 31a, 31b des erste und zweiten Abschnitts 8, 9 aus Metall und/oder der Kasten 1a ist zumindest an den Außenseiten (Oberseite 2, Vorderseite 3, Rückseite 4, Längsseiten 5a, 5b und Bodenseite 6) aus einem Holzwerkstoff. Vorzugsweise ist der Kasten 1a aus einer mehrlagigen, insbesondere 3-lagigen, Sandwichplatte. Hierbei weist die Sperrholzplatte eine mittlere Lage aus Pappelsperrholz mit 25 mm (Millimeter) und zwei äußeren Lagen aus Birkensperrholz mit je 4 mm auf, welche äußeren Lagen jeweils auf einer Seite, der sich gegenüberliegenden Seiten, der mittlere Lage vorgesehen sind.

Zudem sind an den beiden Längsseitenwand 26a, 26b an der betreffenden Längsseite 5a, 5b des Kastens 1a oberhalb der betreffenden ersten Korpusschiene 14a, 31a Aussparungen 54 vorgesehen. Damit wird das Gewicht der Campingbox reduziert, ohne deren Stabilität zu verringern.

Das Ein- und Ausziehen aller ein- und ausfahrbaren Kasteneinschübe 11, 17, 27, 37 kann beispielsweise von Hand erfolgen, was nicht näher dargestellt worden ist.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Campingbox in Form eines in ein Fahrzeug einsetzbaren, insbesondere quaderförmigen, Kastens (1a), mit einer Oberseite (2), mit einer, insbesondere von einer Fahrzeuginnenseite zugänglich ausgebildeten, Vorderseite (3) und mit einer, insbesondere über eine Hecköffnung des Fahrzeugs zugänglich ausgebildeten, Rückseite (4), wobei die Oberseite (2) eine Liege- und/oder Sitzfläche (7) aufweist, **dadurch gekennzeichnet, dass** die Liege- und/oder Sitzfläche (7) zumindest ein erstes, ein zweites und ein drittes, insbesondere jeweils plattenförmiges, Segment (43, 44, 45) aufweist, welche Segmente (43, 44, 45) in eine, eine Rückenlehne (40a) ausbildende Aufstelllage (40) und in eine ebene Liegelage (41) bewegbar sind und hierfür über Schwenkverbindungen (42) zusammenhalten.

2. Campingbox nach Anspruch 1, **dadurch gekennzeichnet, dass** das zweite Segment (44) Vorsprünge (46) aufweist, die in Rücksprünge (47) am anderen dritten Segment (45) eingreifen und an den Böden der Rücksprünge (47) über je zumindest eine Schwenkverbindung (42) verbunden sind.

3. Campingbox nach Anspruch 1 oder 2, **dadurch gekennzeichnet, dass** das erste Segment (43) über zumindest eine Schwenkverbindung (42) mit dem Kasten (1a) verbunden ist und das dritte Segment (45) entlang des Kastens (1a) verschiebbar ist.

4. Campingbox nach Anspruch 3, **dadurch gekennzeichnet, dass** das dritte Segment (45) entlang des Kastens (1a) frei verschiebbar gelagert ist und sich mit zwei Stützen (48) in Liegelage (41) abstützt.

5. Campingbox nach einem der Ansprüche 1 bis 4, **dadurch gekennzeichnet, dass** die Liege- und/oder Sitzfläche (7) ein viertes Segment (49) aufweist, das an einem Ende mit dem Kasten (1a) über zumindest eine Schwenkverbindung (42) verbunden ist und eine ein- und ausklappbare Stütze (50) für eine schräge Kopfstützlage (51) aufweist.

6. Campingbox nach Anspruch 5, **dadurch gekennzeichnet, dass** die ein- und ausklappbare Stütze (50) im eingeklappten Zustand in der Ebene des vierten Segments (49) liegt.

7. Campingbox nach einem der Ansprüche 1 bis 6, **dadurch gekennzeichnet, dass** jede Schwenkverbindung (42) als Scharnier, beispielsweise Blattscharnier, ausgeführt ist.

8. Campingbox nach einem der Ansprüche 1 bis 7, **dadurch gekennzeichnet, dass** die Rückseite (4) über die Breite (B) zumindest einen Abschnitt (8, 9, 10) aufweist, wovon ein erster Abschnitt (8) einen ersten, ein- und ausziehbaren Kasteneinschub (11) mit einem ersten Auszug (12), insbesondere Vollauszug, aufweist, dessen Auszug (12) am Kasten (1a) über zumindest zwei feststehende und sich parallel gegenüberliegende Korpusschienen (14a, 14b) befestigt ist.

9. Campingbox nach Anspruch 8, **dadurch gekennzeichnet, dass** der erste Abschnitt (8) einen zweiten, insbesondere unterhalb des ersten Kasteneinschubs (11) vorgesehenen, ein- und ausziehbaren Kasteneinschub (17) in Form einer Sitzbank (17a) aufweist.

10. Fahrzeug, insbesondere Kraftfahrzeug, mit einer Campingbox (1) nach einem der Ansprüche 1 bis 9.
